# EUROPEAN PATENT APPLICATION

(11) **EP 1 675 438 A1**
(43) Date of publication of application: **28.06.2006**
(21) Application number: 04028867.2
(22) Date of filing: 06.12.2004
(51) Int. Cl.: H05B 33/08, H04N 5/235

(54) **Method for biasing light emitting elements and electrical device**

(71) Applicant: SIEMENS AKTIENGESELLSCHAFT, 80333 München (DE)
(72) Inventor: Perez, Jesus Fernando Guitarte, 80335 München (DE); Verdoy, Carlos Lucas, 81549 München (DE); Lukas, Klaus, 81739 München (DE); Werner, Marco, 81475 München (DE)

(57) **Abstract**

The invention concerns a method for biasing light emitting elements (LED), which cover an illumination-area (IA) comprising the following steps:
a. Applying an illumination-bias-current to the light emitting elements (LED) inside the illumination-area (IA) so that the illumination-area (IA) is illuminated;
b. Selecting a flash-area (FA) within the illumination-area (IA);
c. Applying a flash-bias-current to the light emitting elements inside the flash-area (FA) for a flash-time (FT).

## Description

The present invention concerns a method for biasing light emitting elements, which cover an illumination-area and an electrical device with a display comprising light emitting elements.

Cameras are often embedded into multimedia devices. Such multimedia devices are for example digital cameras or mobile phones, which include a display for viewing information and a camera for taking pictures or videos.

When taking a single picture, low light conditions may cause too dark scenes. This can be improved by means of a synchronized flash light, as it is known from regular photo cameras. Usually, the flash component for a multi-media device is offered as an accessory device, which can be connected to the device. An alternative solution is to have a flash integrated into the multimedia device. Especially for already miniaturized mobile devices this increases significantly the overall size of the multimedia device. This impairs the usability of the multimedia device, especially if traveling, that is for mobile use.

On the other hand, there is a desire to have a homogeneous illumination of the pictures taken with the camera, especially for pictures depicting close objects, e.g. portraits. Additionally a minimum quality of the picture is required also for improving the image quality by later applied digital enhancement algorithms. This minimum quality often cannot be provided without a flash.

It is therefore an object of the invention, to provide a possibility to overcome the difficulties of the state of the art.

This object is achieved by what is disclosed in the independent claims. Advantageous embodiments are subject of the dependent claims.

An illumination area is illuminated by applying an illumination-bias-current to light emitting elements in the illumination-area. For flashing, a flash-area situated within the illumination-area is selected and a flash-bias-current is applied to the light emitting elements inside the flash-area for a predetermined flash-time.

Thus a flash can be realized, which is integrated and does not need further components. Hence the flash does not need additional space. Further no additional costs are incurred. The flash-time is chosen long enough to ensure a sufficient or desired illumination of the desired object.

The illumination-area can be part of a display, which is e.g. integrated in a communication device, e.g. a mobile phone, a PDA (personal digital assistant) , a mobile computer etc. Then the display offers double-functionality. Therefore the implementation of a new component is not required, which saves costs and space, particularly for miniaturized devices.

The flash-area can be a smaller than the illumination-area. This allows a light focusing of the flash. The size and position of the flash-area can be chosen automatically or manually. The choice can be out of a selection of preset values or depending on environmental conditions as ambient light. Alternatively the choice can be dynamically depending e.g. on ambient light, the zoom factor of the camera etc.

Particularly, a smaller flash-area does consume less power than a more extended one. This increases the operating time of a power supply supplying that power, before it is discharged.

In addition or alternatively the flash-bias-current can be higher than the illumination-bias-current. This enables a higher light yield from the flash-area. Particularly in combination with a small flash-area this does not put overburden to the power supply.

Particularly, the application of the flash-bias-current to the flash-area can be synchronized with an actuator of a camera. By acting upon that actuator, a picture is taken. This means, that pictures can be taken with that camera, without the requirement of a separate flash device or to make the camera significantly larger for an integrated but separately realized flash.

The synchronisation can be realised such, that the flash-area is selected, if an actuator of the camera is pressed for taking pictures.

Particularly the pressing of the actuator reaches to a first position. In this first position a picture is not yet taken, but e.g. a required aperture or an exposure time for the taking of the picture is determined. If the actuator is pressed to a picture-taking position, then the flash-bias-current is applied to the light emitting diodes in the flash-area. The exact timing of the application of the flash-bias-current in respect to the picture taking is known to the man skilled in the art, so that negative effects, for example red eyes can be avoided. These criteria for the exact timing can also be used in the context of the invention.

Light emitting diodes (LED) or organic light emitting diodes (OLED) are particularly suited as light emitting devices due to their high light yield, low costs and low power consumption.

To achieve a high light yield, the bias current is chosen to be in the saturation region of the light emitting element. Saturation region means, that no significant higher light yield can be achieved if applying a higher current.

The invention concerns further an electrical device with a display, a camera and a control unit which is adapted to perform any of the above mentioned methods.

Further aspects and advantages of the invention are disclosed in context with Figures, of which show:
Fig.1: An increase of the light intensity by decrease of flash time;
Fig.2: A saturation phase of an OLED light emission;
Fig.3: A mobile phone with a camera and a display.

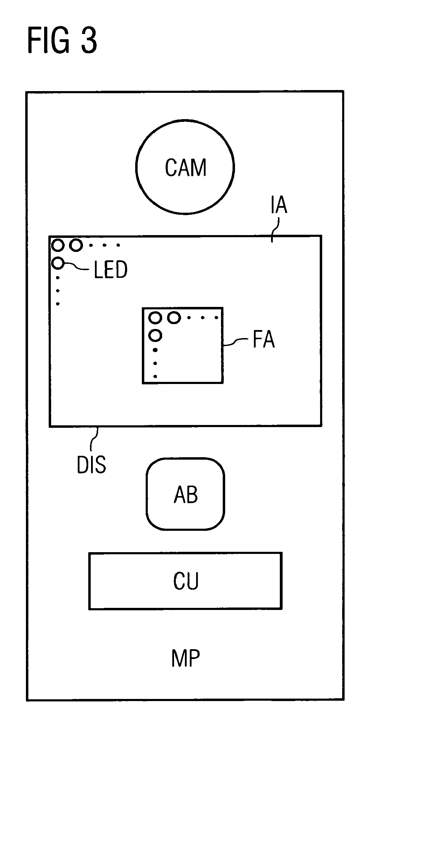

In Fig.3 a mobile phone MP as electrical device is depicted, which has a display DIS and a camera CAM. The display DIS comprises an illumination-area IA and a flash-area FA which is situated inside the illumination-area. The flash-area FA is smaller than the illumination-area in order to enhance light focusing and not to need too much energy which would reduce the operating time of a power supply. Both, the illumination-area IA and the flash-area FA are covered with organic light-emitting diodes (OLEDs) as light emitting elements LED. The advantage of OLEDs and also light emitting diodes (LEDs) is, that such a display DIS does not require a backlight as it is needed for so called passive displays as e.g. LCDs (liquid crystal displays), because polymers of the OLED emit light, when an electrical current flows through them.

OLEDs exhibit an inherently high light yield, which is an advantage for the realization of a flash. Moreover, OLEDs emit light over a wide viewing angle. This enables a homogeneous illumination of an object.

In normal use the total illumination-area IA is, depending on the environmental light or/and the use of the mobile phone illuminated or not. If the user of the mobile phone takes a picture by pressing the actuator button AB, the OLEDs in the flash-area FA receive a timely short (see Fig. 3), but strong current impulse, which is synchronized with the electronic camera, so that in a close time relation to taking of the picture also the flash is activated.

It is particularly foreseen that the actuator button AB has two positions, a first position, where the picture is not yet taken by the camera, but e.g. the dates concerning the picture as exposure time, aperture and focus is displayed to the user. This information can be displayed by a further display at the backside, so that the user of the communication device MP may view it while taking the picture. At the same time flash-area SA is selected within the illumination-area IA, that means that the electrical connection to the current supply is switched such, that current is let only to the OLED that are within the flash-area.
In the second position of the actuator AB, a picture is taken by the camera and the flash-bias-current is applied to the OLEDs in the flash-area.

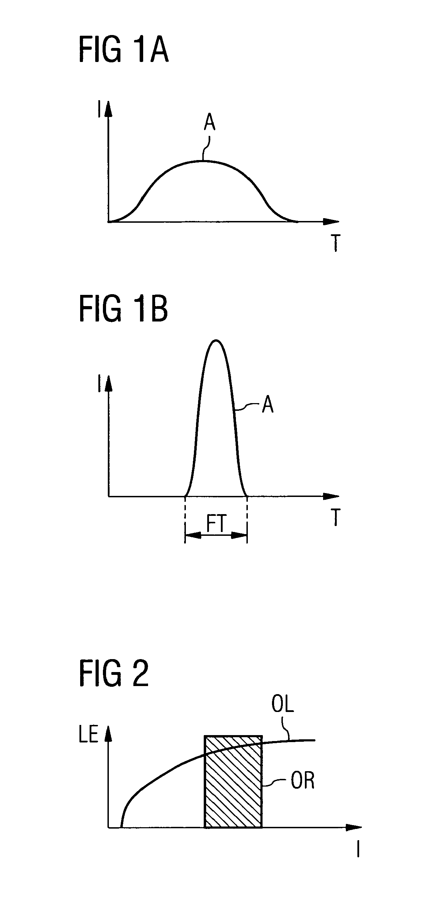

In Fig. 1 the intensity is depicted versus time. It can be seen from Fig. 1a and b, that with the same light emission, which is represented by the area AR a much higher intensity can be achieved if the time, during which light is emitted is shortened. In figure 1b short time is denoted as flash time.

In Fig. 2 the light emission is depicted versus the strength of the electrical current. The light emission increases with increasing current. However, there is an optimum current range OR, wherein the light emission is fairly high, without permanently destroying the OLED due to a too high voltage which is associated with the electrical current through the OLED's current-voltage characteristics. This is the case in the overload range OL. The latter would result in a reduction of operation life time without bringing a significant further illumination effect.

In total, the OLED flash is ideal for smaller devices, such as mobile phones, PDA's (personal digital assistants) and mobile computers, as it can be integrated into devices without requiring additional space, as already existing components are used for both purposes: illumination of a display and flashing. Thus, also no additional hardware is required in addition to that required anyway for the display, e.g. the OLED display. Furthermore, particularly in relation to a separate flash unit, costs are reduced, because of the non-requirement of additional elements for the flash.

This possibility of integrating the OLED flash enhances the portability of mobile devices. Furthermore also the user friendliness is improved, as the user cannot forget the additional flash.

### List of references

- MP: electrical device
- CU: control unit
- A: actuator/actuator button
- DIS: display unit
- LED: light emitting element
- CAM: camera
- IA: illumination-area
- FA: flash-area
- I: current
- A: area
- T: time
- FT: flash time
- LE: light emission
- OR: optimum range
- OL: overload range

## Claims

1. Method for biasing light emitting elements (LED), which cover an illumination-area (IA) comprising the following steps:
a. Applying an illumination-bias-current to the light emitting elements (LED) inside the illumination-area (IA) so that the illumination-area (IA) is illuminated;
b. Selecting a flash-area (FA) within the illumination-area (IA);
c. Applying a flash-bias-current to the light emitting elements inside the flash-area (FA) for a flash-time (FT).

2. Method according to claim 1, wherein the selected flash-area (FA) is smaller than the illumination-area (IA).

3. Method according to claim 1 or 2, wherein the flash-bias-current is higher than the illumination-bias-current.

4. Method according to any of the previous claims wherein the applying of the flash-bias-current in step c) is synchronized with an actuator (AB) of a camera, so that step c) is performed if acting upon the actuator (AB), particularly if pressing the actuator (AB) to a taking-pictures-position.

5. Method according to any of the previous claims wherein the light emitting elements (LED) are light emitting diodes or/and organic light emitting diodes.

6. Method according to any of the previous claims wherein the flash-bias-current is in the saturation region (OR) of a light emission yield of the light emitting element (LED).

7. Method according to any of the previous claims, wherein the size or/and position of the flash-area (FA) is defined automatically or manually.

8. Electrical device (MP), particularly a communication device, with
a. a display (DIS) for displaying information, said display (DIS) comprising light emitting elements (LED) for illuminating an illumination-area (IA) of the display and a flash-area (FA) within the illumination-area (IA);
b. a camera (CAM) for taking pictures with an actuator (AB)for activating the camera (CAM);
c. a control unit (CU) for controlling the application of bias current to the light emitting elements (LED), which is arranged so that
i. an illumination-bias-current is applied to the light emitting elements (LED) in the illumination-area (IA);
ii. a flash-area (FA) within the illumination-area (IA) is selected;
iii. a flash-bias-current is applied to the light emitting elements (LED) in the flash-area (FA) upon acting on the actuator (AB) of the camera (CAM);

9. Electrical device (MP) according to claim 8, wherein the light emitting elements (LED) are light emitting diodes or organic light emitting diodes.

10. Electrical device (MP) according to claim 8 or 9, wherein a further display is foreseen at the side of the electrical device (MP) opposite to the camera (CAM).

11. Electrical device (MP) according to any of the claims 8 to 10, wherein the display (DIS) has at least partly a concave shape.
